# DEMANDE DE BREVET EUROPEEN

(11) **EP 0 723 241 A1**
(43) Date de publication de la demande: **24.07.1996**
(21) Numéro de dépôt: 96400154.9
(22) Date de dépôt: 22.01.1996
(51) Int. Cl.: G06F 17/60

(54) **Procédé d'émission indépendante de messages sur une pluralité de distributeurs de carburant**

(30) Priorité: 23.01.1995 FR 9500808
(71) Demandeur: SCHLUMBERGER INDUSTRIES, F-92120 Montrouge (FR)
(72) Inventeur: Burgess, Thierry, F-75010 Paris (FR); Bakker, Anton, F-75006 Paris (FR)
(74) Mandataire: Lemoyne, Didier

(57) **Abrégé**

Procédé d'émission indépendante de messages sur une pluralité de distributeurs (D1, D2) de carburant d'une station-service (20), chaque distributeur étant équipé d'un dispositif (E1, E2) d'émission de messages.

Selon l'invention, ledit procédé comprend les étapes suivantes:
- édition d'au moins un message consistant à enregistrer ledit message sur un support d'enregistrement analogique (11), puis à numériser, compresser et stocker dans un fichier (13) le message enregistré,
- transmission du message à ladite station-service (20) consistant à transmettre ledit fichier (13) à une unité (21) de traitement, laquelle est connectée à chaque dispositif (E1, E2) d'émission, et à stocker ledit fichier (13) dans l'unité (21) de traitement,
- émission d'un message consistant à:
   . au démarrage de la distribution de carburant par un distributeur (D1), d'une part, à appeler un fichier (13) disponible dans l'unité de traitement par activation d'une voie (V1) d'un module (220) de démultiplexage/décompression, et, d'autre part, à convertir le message numérisé décompressé en un message analogique apte à être émis par le dispositif (E1) d'émission correspondant,
   . à la fin de la distribution de carburant par ledit distributeur (D1), interrompre l'émission du message par désactivation de ladite voie correspondante (V1) du module (220) de démultiplexage/ décompression.

Application à l'animation des aires de distribution de carburant.

## Description

La présente invention concerne un procédé d'émission indépendante de messages sur une pluralité de distributeurs de carburant d'une station-service, chaque distributeur étant équipé d'un dispositif d'émission de messages.

L'invention trouve une application particulièrement avantageuse dans le domaine de l'animation des aires de distribution de carburant.

On connaît un système de diffusion d'images animées vidéo utilisant une technologie analogique. Selon ce système connu, chaque distributeur de carburant, ou volucompteur, est équipé d'un dispositif d'émission constitué par un écran connecté à un lecteur de vidéodisque. Chaque écran est donc relié à une source d'images distincte. Ce système de diffusion présente l'inconvénient d'être onéreux aussi bien au niveau de la production qu'au niveau de l'installation.

Il existe également un système d'affichage des informations du volucompteur (prix, volume, prix au litre) utilisant un moniteur de diffusion. Toutefois, cette technique n'est pas destinée à l'émission d'images animées de type vidéo ou graphique.

Aussi, le problème technique à résoudre par l'objet de la présente invention est de proposer un procédé d'émission indépendante de messages sur une pluralité de distributeurs de carburant d'une station service, chaque distributeur étant équipé d'un dispositif d'émission de messages, procédé qui permettrait d'émettre un message, par exemple des images animées vidéo ou graphiques, sur chaque dispositif d'émission de la station-service à partir d'une seule et même unité centralisée, l'émission d'un message sur un dispositif d'émission étant indépendante de l'émission du même message ou d'un message différent sur les autres dispositifs d'émission de la station-service.

La solution au problème technique posé consiste, selon la présente invention, en ce que ledit procédé comprend les étapes suivantes :
- édition d'au moins un message consistant à:
   . composer ledit message et l'enregistrer sur un support d'enregistrement analogique,
   . convertir sous forme numérique le message enregistré sous forme analogique,
   . compresser le message ainsi numérisé,
   . stocker dans un fichier le message numérisé compressé,
- transmission du message à ladite station-service consistant à transmettre ledit fichier à une unité de traitement de la station-service, ladite unité de traitement étant connectée à chaque dispositif d'émission, et à stocker ledit fichier dans une mémoire de l'unité de traitement,
- émission d'un message consistant à :
   . au démarrage de la distribution de carburant par un distributeur, d'une part, à provoquer un appel d'un fichier disponible dans une mémoire de l'unité de traitement par activation d'une voie correspondante d'un module de démultiplexage/décompression de ladite unité de traitement, et, d'autre part, convertir le message numérisé décompressé en un message analogique apte à être émis par le dispositif d'émission correspondant audit distributeur,
   . à la fin de la distribution de carburant par ledit distributeur, interrompre l'émission du message par désactivation de ladite voie correspondante du module de démultiplexage/décompression.

Ainsi, après qu'il ait été édité puis transmis à l'unité de traitement de la station-service, le message est émis sur le dispositif d'émission du distributeur au moment où la distribution débute, généralement au décroché du pistolet, l'émission étant interrompue en fin de distribution avec le raccroché dudit pistolet.

Le contenu du ou des messages à émettre sera le plus souvent composé de manière définitive au niveau de l'édition. Toutefois, selon une variante du procédé conforme à l'invention, il est prévu que le fichier mémorisé dans l'unité de traitement de la station-service est apte à être créé et/ou modifié localement à partir de ladite unité de traitement.

Il est alors possible d'introduire dans le ou les messages à émettre des informations complémentaires d'intérêt local.

La description qui va suivre en regard du dessin annexé, donné à titre d'exemple non limitatif, fera bien comprendre en quoi consiste l'invention et comment elle peut être réalisée.

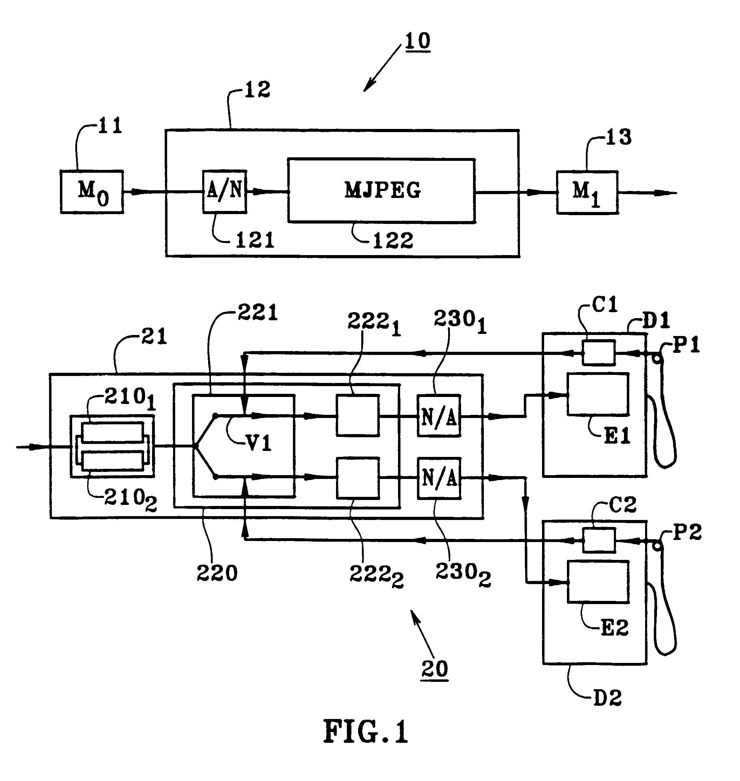

La figure 1 est un bloc-diagramme d'un dispositif de mise en oeuvre du procédé, objet de l'invention.

Le bloc-diagramme de la figure 1 représente de manière schématique un dispositif permettant la mise en oeuvre d'un procédé d'émission indépendante de messages sur une pluralité de distributeurs D1, D2 de carburant d'une station-service globalement référencée 20.

Dans la suite de la description, les messages à émettre seront supposés être des messages de type vidéo. Dans ce cas, les distributeurs D1, D2 de carburant sont équipés chacun d'un moniteur TV, E1 et E2 respectivement. Bien entendu, si le message à émettre est un message uniquement audio, les dispositifs d'émission équipant les distributeurs seraient de simples haut-parleurs.

Dans une première étape effectuée dans une station 10 d'édition, au moins un message vidéo Mo est composé et enregistré sur un support 11 d'enregistrement analogique, une bande vidéo par exemple.

Le message Mo lui-même peut être une publicité concernant un ou plusieurs produits ou encore un sujet sur la compagnie distributrice du carburant.

Le message analogique Mo est ensuite converti, à l'intérieur d'un ordinateur 12 en un message numérique par un convertisseur analogique/numérique 121, puis compressé à l'aide d'un moyen 122 de compression. La compression réalisée peut être de type MPEG ou MJPEG.

Le message numérisé compressé M1 est alors stocké dans un fichier 13.

Dans une deuxième étape, le fichier 13 contenant le message Mo à émettre est transmis aux différentes stations-service devant émettre ledit message sur au moins un des écrans des distributeurs de carburant.

La transmission dudit fichier 13 peut se faire par simple envoi d'une disquette, d'un disque CD-ROM ou de tout autre support, ou bien par l'intermédiaire d'un réseau, tel que satellite ou fibres optiques, à condition cependant que ledit réseau présente une bande passante suffisante.

Le fichier 13 est reçu au niveau de la station-service 20 sur une unité 21 de traitement, un ordinateur par exemple, laquelle unité de traitement est connectée en sortie à chaque dispositif E1, E2 d'émission, des moniteurs TV dans l'exemple choisi. A son arrivée sur l'unité 21 de traitement, le message M1 est stocké dans au moins une des mémoires 210₁, 210₂ : disque dur, disque CD-ROM, etc, de l'unité 21 de traitement.

Dans une troisième étape du procédé de l'invention correspondant à l'émission d'un message sur au moins un des écrans E1, E2, il est prévu qu'au démarrage de la distribution de carburant par un distributeur de carburant, D1 par exemple, le décroché du pistolet P1 provoque l'activation de la voie correspondante V1 d'un démultiplexeur 221 d'un module 220 de démultiplexage/décompression. Le signal d'activation de la voie V1 peut être fourni par le calculateur C1 du volucompteur du distributeur D1 ou encore par le contrôleur de pompes de la station-service 20. Un message disponible stocké dans une des mémoires 210₁, 210₂ est ainsi appelé et acheminé par la voie V1 du démultiplexeur 221 vers un moyen 222₁ de décompression du module 220. Le message numérisé et décompressé est ensuite converti en message analogique par un convertisseur numérique/analogique 230₁ de manière à pouvoir être visualisé sur l'écran E1 du distributeur D1 de carburant.

Au raccroché du pistolet P1, c'est-à-dire à la fin de la distribution de carburant par le distributeur D1, l'émission du message est interrompue par désactivation de la voie V1 correspondante du module 220 de démultiplexage/décompression.

Bien entendu, les messages à émettre peuvent être identiques ou différents.

Enfin, à partir de l'unité 21 de traitement il est possible de créer et/ou modifier localement, au niveau de la station-service 20, tout fichier 13 mémorisé dans l'unité 21 de traitement.

## Revendications

1. Procédé d'émission indépendante de messages sur une pluralité de distributeurs (D1, D2) de carburant d'une station-service (20), chaque distributeur étant équipé d'un dispositif (E1, E2) d'émission de messages, caractérisé en ce que ledit procédé comprend les étapes suivantes :
- édition d'au moins un message consistant à :
. composer ledit message et l'enregistrer sur un support d'enregistrement analogique (11),
. convertir sous forme numérique le message (Mo) enregistré sous forme analogique,
. compresser le message ainsi numérisé,
. stocker dans un fichier (13) le message numérisé compressé (M₁),
- transmission du message à ladite station-service (20) consistant à transmettre ledit fichier (13) à une unité (21) de traitement de la station-service, ladite unité (21) de traitement étant connectée à chaque dispositif (E1, E2) d'émission, et à stocker ledit fichier (13) dans une mémoire (210₁, 210₂) de l'unité (21) de traitement,
- émission d'un message consistant à:
. au démarrage de la distribution de carburant par un distributeur (D1), d'une part, à provoquer un appel d'un fichier (13) disponible dans une mémoire (210₁, 210₂) de l'unité de traitement par activation d'une voie correspondante (V1) d'un module (220) de démultiplexage/décompression de ladite unité (21) de traitement, et, d'autre part, à convertir le message numérisé décompressé en un message analogique apte à être émis par le dispositif (E1) d'émission correspondant audit distributeur (D1),
. à la fin de la distribution de carburant par ledit distributeur (D1), interrompre l'émission du message par désactivation de ladite voie correspondante (V1) du module (220) de démultiplexage/ décompression.

2. Procédé selon la revendication 1, caractérisé en ce que le fichier (13) mémorisé dans l'unité (21) de traitement de la station-service (20) est apte à être créé et/ou modifié localement à partir de ladite unité (21) de traitement.
